Europäisches Patentamt

European Patent Office

Office européen des brevets

(19)

(11) Publication number: **0 096 373**
**B1**

(12) **EUROPEAN PATENT SPECIFICATION**

(45) Date of publication of patent specification: **26.04.89**

(51) Int. Cl.⁴: **G 06 F 1/00, F 16 M 11/12**

(21) Application number: **83105470.5**

(22) Date of filing: **01.06.83**

(54) Adjustable support for CRT keyboard.

(30) Priority: **07.06.82 US 386131**

(43) Date of publication of application:
**21.12.83 Bulletin 83/51**

(45) Publication of the grant of the patent:
**26.04.89 Bulletin 89/17**

(84) Designated Contracting States:
**BE DE FR GB SE**

(56) References cited:
**EP-A-0 010 491**
**EP-A-0 038 068**
**EP-A-0 046 225**
**DE-A-2 847 135**
**US-A-2 541 075**
**US-A-3 516 343**
**US-A-3 891 301**

(73) Proprietor: **HAWORTH, INC.**
**One Haworth Center 1400 Highway M-40**
**Holland Michigan 49423 (US)**

(72) Inventor: **Smeenge, Paul A.**
**7955 Shadybrook, S.E.**
**Ada Michigan (US)**
Inventor: **Wilson, Harold R.**
**833 144th Avenue**
**Holland Michigan (US)**
Inventor: **Nelsen, Randy P.**
**2801 Holiday, S.W.**
**Wyoming Michigan (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a combination of a primary support defining thereon an enlarged upwardly facing primary work surface and an auxiliary shelflike support defining thereon an enlarges upwardly facing auxiliary work surface adapted for supporting a keyboard unit thereon, said shelflike support being connected to said primary support by a mounting mechanism for movably supporting the auxiliary support relative to the primary support, as set forth in the preamble of claim 1. Such a combination is known from EP—A—38 068.

In the known arrangement, said auxiliary support is mounted to the primary support by means of a column which is connected at its lower portion to the base of a body providing said primary work surface at the top thereof. At the top of the column, a horizontally extending arm is mounted which may be rotated on a vertical axis with respect to said column. Said arm veers the monitor of a computer terminal which may be rotated on a vertical axis with respect to said arm. There are no means by which the position of said monitor may be varied in a vertical direction.

From US—A—2 541 075 a typewriter desk is known providing a spring balancing device for a retractable and vertically movable typewriter support platform mounted at a desk. The typewriter supporting platform is supported by a parallelogram link means which in turn is pivotally mounted at a carriage which is guided on guide rails mounted on the desk body. In the lowered position of the platform, the carriage may be moved in order to bring the platform in a stored condition. Although there are hook means for a vertical adjustment of the platform, it may be positioned at distinct height levels only. Additionally, this may be done in the fully extended position of the platform only. There are no means to enable the rotation of the platform around a vertical axis.

Small computers normally employ a screen and a keyboard, the latter generally being separate from the screen to permit the operator to move the same about. These computers are often relatively deep, so that a conventional desk or work surface is often not convenient for positioning the computer. Further, most operators prefer to independently adjust the elevation of the keyboard and screen to accommodate their own comfort and convenience. Very often, computer terminals are installed in existing work places, so that the existing furniture is to be equipped with means for supporting the keyboard at least in a comfortable and convenient manner. The structures disclosed in the aforementioned documents, however, do not at all comply with these desires.

It is therefore the object of the present invention to provide an object of the aforementioned kind by which an auxiliary shelflike support may be brought into a comfortable and convenient position for the operator, and which may also be installed at an existing desk without needing a particular body structure of such desk for mounting the auxiliary support.

This object is obtained by the characterizing features of claim 1. Preferred embodiments of the invention are subject matter of the subclaims.

The invention provides an improved auxiliary work support surface which can be readily attached to, and, in fact, retrofitted on, a conventional primary work surface, with the auxiliary work surface being readily movable between a storage position beneath the primary work surface and a use position spaced forward from the primary work surface wherein said auxiliary work surface can also be selectively moved about when in the use position so that the operator can selectively vary the position of the auxiliary work surface both elevationally and horizontally relative to the primary work surface.

The invention is now further explained with reference to the accompanying drawings.

Brief Description of the Drawings
Figure 1 is a side elevational view illustrating the auxiliary work surface assembly of this invention as mounted on a conventional primary work surface.

Figure 2 is a sectional view similar to Figure 1 but showing the auxiliary work surface assembly on an enlarged scale.

Figure 3 is a fragmentary top view of the carriage assembly as taken along line III—III in Figure 2.

Figure 4 is an end elevational view taken along line IV—IV in Figure 1.

Figures 5, 6 and 7 are enlarged, fragmentary sectional views taken respectively along lines V—V, VI—VI and VII—VII in Figure 2.

Figure 8 is a fragmentary top view showing different locations of the auxiliary work surface relative to the primary work surface.

Figure 9 is a fragmentary elevational view of a modification.

Figure 10 is an end view along line X—X in Figure 9.

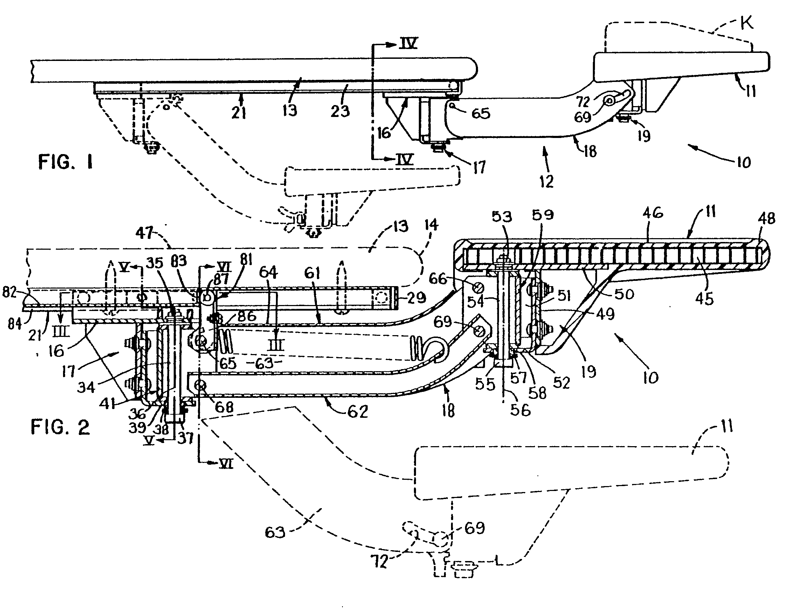

Detailed Description
Figures 1 and 2 illustrate an adjustable work surface assembly 10 according to the invention. This assembly includes a shelflike auxiliary support 11 which is sized to enable it to comfortably support thereon a keyboard K as conventionally associated with a computer. This keyboard support 11 is interconnected by a mounting mechanism 12 to a conventional stationary worksurface support 13, the latter conventionally comprising the top of a table, desk or other similar work surface structure.

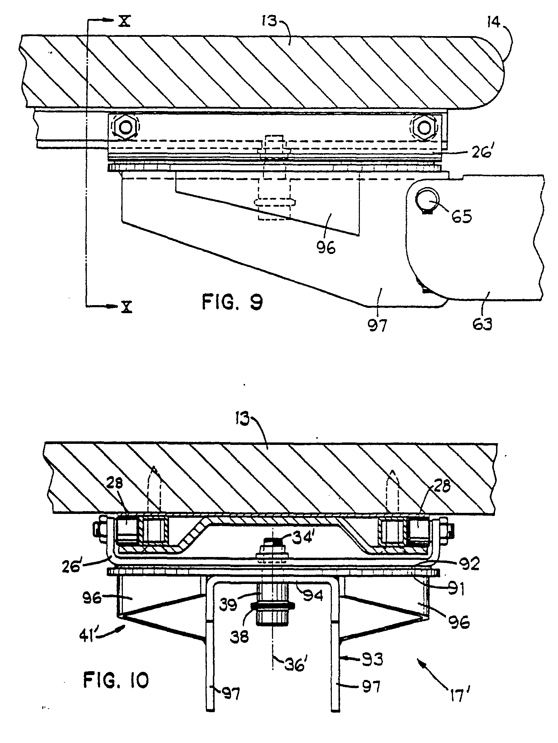

The work surface assembly 10 and the mechanism 12 which interconnects the keyboard support 11 to the stationary support 13, provides the auxiliary support 11 with a wide range of movements relative to the primary support 13 so that the keyboard K can be positioned for optimum user comfort while also providing maximum flexibility in terms of positional movement. This mounting mechanism 12 enables the keyboard support 11 to be horizontally moved between an outer position wherein it is spaced a substantial distance forwardly from the front edge 14 of the stationary support 13, as illustrated in Figure 1, and an inner position wherein this keyboard support 11 is disposed closely adjacent the front edge 14 of the stationary support 13, as illustrated by solid lines in Figure 2. This mounting mechanism 12 also enables the keyboard support 11 to be vertically displaced through a selected distance, such as between an upper position wherein the keyboard support 11 is approximately planar with the stationary support 13 as indicated by the solid line positions in Figures 1 and 2, and a lowered position wherein the keyboard support 11 is positioned vertically downwardly a substantial distance below the stationary support 13, as indicated by dotted lines in Figure 2. This mounting mechanism 12 enables the keyboard support to be positioned horizontally at any location between these inner and outer positions, and also vertically at any location between these upper and lower positions. Mounting mechanism 12 also enables the keyboard support 11 and the keyboard K mounted thereon, when the keyboard support 11 is in its lowermost position as indicated by dotted lines in Figure 2, to be moved rearwardly into a storage position located totally below the stationary support 13 as indicated by dotted lines in Figure 1. The mounting mechanism 12 also includes hinge structures which enable the keyboard support 11 to be angularly tilted or displaced horizontally sidewardly relative to the work surface 13, substantially as indicated by dotted lines in Figure 8.

To provide the numerous movements and positional relationships described above, the mounting mechanism 12 includes a carriage 16 slidably supported on the underside of the stationary support 13, which carriage 16 mounts thereon a first vertical hinge assembly 17. This hinge assembly 17 is connected to the rearward end of a link means 18, the latter being a vertical parallelogram linkage in the preferred embodiment, which at its forward end is connected to a second vertical hinge assembly 19 as mounted on the underside of the keyboard support ll.

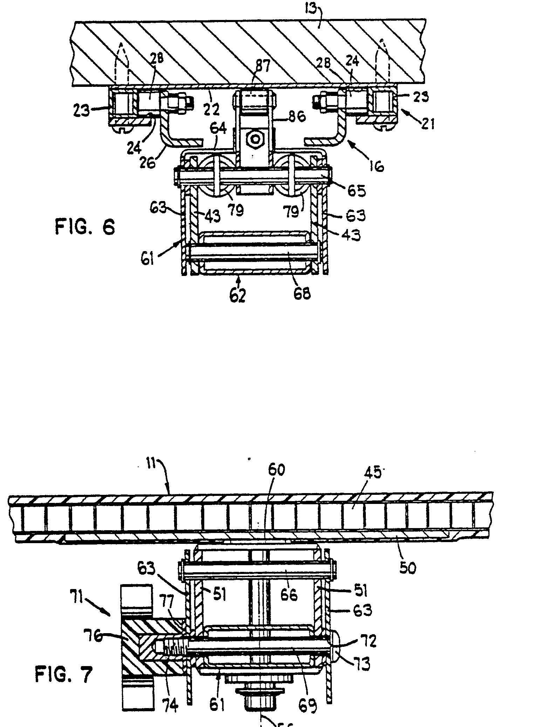

To movably and guidably support the carriage 16, the underside of stationary support 13 has guide rail means 21 fixed thereto. This guide rail means includes a base plate 22 (Figure 6) secured to the underside of the support 13, and a pair of parallel guide rails 23 are fixed thereto and project rearwardly from a location adjacent the front edge 14 of the support 13 to a location adjacent the rear edge thereof. These rails 23, in cooperation with base plate 22, define a pair of opposed, sidewardly opening guide channels 24. The forward ends of these guide channels are closed by a stop plate 29 which extends thereacross in close proximity to the front edge 14.

The carriage 16 includes a shallow, upwardly opening channel or U-shaped member 26. The legs 27 of member 26 project upwardly adjacent the channels 24, and these legs 27 mount pairs of front and rear rollers 28 which are confined within the channels 24.

The structure of hinge means 17 will now be described. A U-shaped, rearwardly opening bracket 31 projects downwardly from the carriage plate 26 and is fixed thereto. This bracket 31 mounts thereon an L-shaped hinge bracket 32, the latter defining a lower hinge plate 33 which is parallel with and spaced downwardly from the planar center portion 26A of the carriage member 26. A vertically elongated hinge shaft 34 extends between these plates 26A and 33. The upper end of hinge shaft 34 is threaded into a nut 35 which is fixed to the carriage plate 26. This hinge shaft 34, which defines a first vertical hinge axis 36, has an enlarged head 37 on the lower end thereof, and a plurality of spring washers 38 surround the shaft and are supported on the head 37. These spring washers 38 react against an annular bushing 39, the latter being slidably supported on the shaft 34 and slidably supported within an enlarged opening formed in the hinge plate 33, whereby the bushing 39 is resiliently urged upwardly into engagement with an intermediate member 41 which is pivotally supported on the hinge shaft 34.

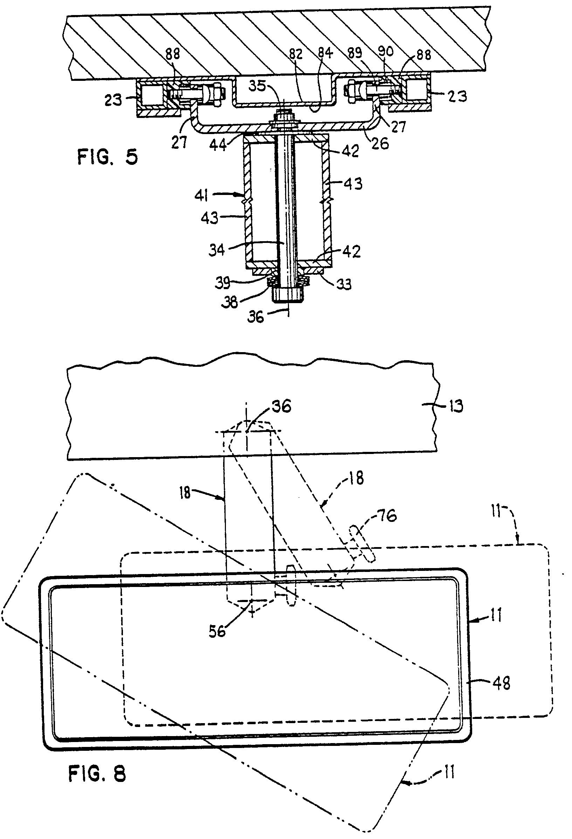

This pivotally supported intermediate member 41 includes parallel top and bottom walls 42 (Figure 5) rigidly joined together by sidewalls 43. The resiliently urged bushing 39 bears against the bottom wall 42 so that the top wall 42 is hence maintained in engagement with a plastic support washer 44 which functions as part of a friction brake to normally prevent the horizontal pivoting of the intermediate member 41 within the stationary bracket structure about the vertical hinge axis 36.

Considering now the keyboard support 11, same is preferably formed of a plastics material which is suitably molded about a central core 45, whereby the keyboard support 11 defines an upper planar surface 46 which is substantially horizontal and approximately parallel with the upper surface 47 of the stationary support 13. The keyboard support 11 preferably has a small upwardly projecting ridge 48 around the periphery thereof. Support 11 also has a support plate 50 fixedly molded in the underside thereof, which support plate 50 has a vertical bracket plate 49 fixed thereto and projecting downwardly therefrom. This bracket 49 fixedly mounts thereon an L-shaped bracket 51 having a lower hinge plate 52 which is parallel with and spaced downwardly from the support plate 50. A hinge pin or shaft 54 extends vertically between the plates 50 and 52, and defines a second vertical hinge axis 56. The upper end of this hinge pin 54 is threadably anchored within a nut 53 which is fixed to the support plate 50, whereas the lower end of the hinge pin has an enlarged head 55 and spring washers 57 are mounted thereon and resiliently coact with an annular bushing 58 which is slidably supported on the hinge pin 54 and extends through an opening in the hinge plate 52 for engagement with the lower wall of an intermediate member 59 which is urged upwardly so that its upper wall engages the friction washer 60. The member 59 is substantially identical to the afore described intermediate member 41 and is supported for pivoting movement on the hinge pin 54 about the vertical hinge axis 56 thereof. This latter-described structure hence defines the second vertical hinge assembly 19.

Considering now the link means 18, same includes elongated upper and lower links 61 and 62, respectively, disposed in substantially parallel relationship. The upper link 61 is, in the illustrated embodiment, of a downwardly opening U-shaped configuration and includes a pair of parallel vertical side legs 63 joined together by a top wall 64. The rearward end of this upper link 61 is hingedly joined to the intermediate member 41 by a horizontal hinge pin 65 which extends through the intermediate member sidewalls 43 and is supported on the link sidewalls 63, which latter sidewalls overlap the outer surfaces of the intermediate member sidewalls 43. A similar horizontal hinge pin 66 pivotally joins the forward end of link 61 to the other intermediate member 59.

The lower link 62, in the preferred embodiment, is of a tubular cross section and is sized so as to be totally confined between the sidewalls 63 of the upper link inasmuch as this provides the overall link means with a more streamlined appearance. The rearward end of this lower link 62 is also hingedly joined to the intermediate member 41 by a horizontal hinge pin 68 which extends through the lower link so that the opposite ends thereof are appropriately supported on the intermediate member sidewalls 43. A similar horizontal hinge pin 69 joins the forward end of the link 62 to the other intermediate member 59. The links 61 and 62 are each of equal length, and the hinge pins 68 and 69 are equally spaced downwardly from the respective upper hinge pins 65 and 66, whereby the links 61 and 62 and their pivotal cooperation with the intermediate members 41 and 59 define a pivotally displaceable parallelogram linkage. This relationship enables the forward end of the linkage to be pivotally swung upwardly or downwardly, thereby causing a raising or lowering of the keyboard support 11, while at the same time maintaining the upper surface 46 of the keyboard support 11 substantially horizontal irrespective of the elevation thereof.

To enable keyboard support 11 to be stationarily supported at any selected elevational position, a lock means 71 is provided at the outer end of the link means 18 so as to be readily accessible to the keyboard operator. This lock means 71 includes the lower outer hinge pin 69, which pin 69 is of increased length so as to project through elongated slots 72 formed in the sidewalls 63 of the upper link 61, which slots 72 are generated about the axis of the upper outer hinge pin 66 as a center. The hinge pin 69 projects through these arcuate slots 72 and has an enlarged head 73 at one end thereof, and a threaded end 74 at the other end thereof. A hand knob 76 is positioned adjacent the sidewall 63 and is threadably engaged with end 74 of hinge pin 69, which hand knob 76 has the hub thereof adapted to engage a friction washer 77 which surrounds the hinge pin and is clampable between the hub of the knob 76 and the sidewall 63.

When the parallelogram linkage 61-62 is vertically pivoted upwardly or downwardly, the hinge pin 69 is slidably moved along the arcuate slots 72. The forward end of the slot acts as a stop and defines the lowermost elevational position of the keyboard support, whereas the rearward end of the slot 72 acts as a stop for defining the uppermost elevational position of the keyboard support. When hand knob 76 is manually rotated to snugly frictionally engage the friction washer 77 between the hand knob and the sidewall 63, this prevents the hinge pin 69 from being slidably displaced within the slot 72, thereby holding the parallel links 61 and 62 in a rigid relationship so that the keyboard support 11 is stationarily held in the selected elevational position.

Link means 18 also has spring means associated therewith for urging the keyboard support 11 into its uppermost elevational position. This spring means includes a pair of elongated tension springs 79 which are confined within the interior of the upper link 61, whereby one end of the springs 79 are anchored around the rear upper hinge pin 65, whereas the other ends of these springs 79 are anchored to the lower link 62, such as in the vicinity of the front hinge pin 69. Springs 79 continually bias the linkage 61—62 in a counterclockwise direction toward the uppermost elevational position.

To define the inner and outer positional limits of the keyboard support 11 when the latter is in its use position, and to prevent the keyboard support from being moved into its storage position except when the keyboard support is in its lowermost elevational position, the assembly 10 also includes a positional limit structure 81 coacting between the stationary support 13 and the support mechanism 12. This limit structure 81 includes an elongated control rail 82 fixed to the underside of the support surface 13 at a location between the guide rails 23. This control rail 82 projects forwardly from the rearward end of the guide rails and terminates at its forward end in a transverse stop surface 83. This stop surface 83 is spaced rearwardly a substantial distance from the front edge 14, and in fact is spaced rearwardly a substantial distance from the front stop 29. The spacing between these stops 29 and 83 effectively defines and limits the permissible front-to-back horizontal displacement of the keyboard support 11 relative to the stationary support 13.

This limit structure 81 also includes a cooperating stop element associated with the support mechanism 12. This is provided by a bracket 86 which is secured to and projects upwardly from the upper link 61 adjacent the rearward end thereof, which bracket 86 supports thereon a cam or stop in the form of a roller 87. This roller 87 is movable horizontally between and is adapted to abuttingly contact the opposed stop surfaces 83 and 29 for limiting the respective inner and outer positions of the keyboard support 11 so long as the latter is spaced slightly upwardly above its lowermost elevational position. Further, so long as the keyboard support 11 is spaced slightly upwardly above its lowermost elevational position, the roller 87 will abut the rear stop surface 83 and prevent the keyboard support 11 from being moved significantly under the stationary support 13. This thus prevents the keyboard support from being pushed inwardly a sufficient extent as to cause the keyboard K to strike the front edge 14.

However, when the keyboard support 11 is in its lowermost elevational position, then the roller 87 is disposed at an elevation whereby it will move rearwardly past the rear stop surface 83, and in fact this roller 87 will effectively rollingly move along the lower control surface 84 defined on the control rail 82, whereupon the keyboard support 11 and the keyboard K thereon can hence be moved rearwardly into a storage position located in its entirety below the stationary support 13. When in this lowermost elevational position, sufficient clearance exists for the keyboard K to be stored totally beneath the stationary support 13. Further, the engagement of the roller 87 with the control surface 84 maintains the keyboard support in this lowermost elevational position so as to permit safe storage of the keyboard K beneath the stationary support 13.

To restrict accidental displacement of the carriage 16 along the guide rails 23, the carriage additionally mounts thereon a friction brake which cooperates with the stationary base plate 22. This friction brake includes a friction brake block 88 (of plastics material) mounted on the carriage plate 26 and disposed in frictional sliding engagement with the guide rails 23 so as to permit linear displacement of the carriage only when the operator applies a substantial force to the assembly 10 so as to forcibly move the carriage and hence the keyboard support 11 inwardly or outwardly relative to the stationary support 13. This friction brake is otherwise sufficient to stationarily hold the carriage in the selected position. The brake blocks 88 are mounted on the carriage legs 27 by pins 89, and springs 90 urge the brake blocks against the guide rails.

OPERATION

With the illustrated embodiment, the keyboard support 11 mounting thereon the keyboard K will normally be stored in the storage position indicated by dotted lines in Figure 1, in which position the keyboard support 11 is in its lowermost elevational position and is retracted rearwardly so as to be disposed entirely below the work surface 13. In this storage position, the roller 87 engages the control rail 82 and positively maintains the support 11 in this lowermost position, in opposition to the urging of springs 79.

To use the keyboard, the operator will grasp the edge of support 11 and slide assembly 10 outwardly into a use position wherein the support 11 is positioned in front of the stationary support 13. As the assembly 10 is manually moved outwardly, the support 11 is maintained in its lowermost position until reaching a position wherein the rear edge of support 11 is approximately, vertically aligned with the front edge 14 of support 13. At that point, the roller 87 disengages the forward end of control rail 82 and springs 79 then resiliently urge the linkage 61—62 counterclockwise, whereby support 11 is swung upwardly into its uppermost position wherein the rear edge of support 11 is closely adjacent but spaced slightly from the front edge 14 of support 13. This uppermost use position is limited by the engagement of hinge pin 69 with the outer end of the arcuate slots 72. In this uppermost use position, the roller 87 is disposed substantially in engagement with the base plate 22. The operator can then horizontally position the keyboard support 11 relative to the stationary support 13 by pulling the support 11 further outwardly to increase the spacing thereof from the stationary support 13, which outward pulling is accompanied by corresponding displacement of the carriage 16. The friction brake 88 then holds the carriage 16 stationary in the selected position. If desired, the operator can press downwardly on the support 11, thereby causing the linkage 61—62 to swing downwardly about the hinge pins 65—66 in opposition to the urging of the springs 79, which will cause a lowering of the support 11 while still maintaining the upper surface horizontal. The support 11 can thus be positioned elevationally either at or anywhere between the upper and lower elevational positions indicated in Figure 2. When the support 11 is at the desired elevation, the operator then manually grips the hand knob 76 and rotatably tightens same so that the friction lock 71 will be engaged, thereby preventing displacement of the hinge pin 69 along the slots 72, and hence rigidly connecting the links 61 and 62 together to prevent pivoting movement thereof. This stationarily locks the keyboard support 11 at the selected elevation.

The keyboard support 11 can also be angularly displaced relative to the stationary support 13. This angular movement can occur about either of the hinge axes 36 and 56. For example, the washer 60 functions as a friction brake (due to urging of spring washers 57) which coacts between the support 11 and intermediate member 59 for normally holding the support 11 stationary relative to the outer hinge axis 56. However, by exerting sufficient manual torque on the support 11, this friction brake can be overcome so that the support 11 can be manually pivoted about the outer vertical hinge axis 56 to permit angular orientation of the support about this latter axis, substantially as indicated by dash-dot lines in Figure 8. Alternately, the desired angularity of the support 11 can be achieved solely by hingeably swinging the assembly about the inner vertical hinge axis 36. Again, the washer 44 creates a friction brake (due to urging of springs 38) which coacts between the carriage 26 and the intermediate member 41 for normally preventing pivoting movement about this axis 36, but the operator can again manually overcome this friction brake and angularly displace both the support 11 and the linkage 18 about this inner vertical axis 36.

The operator can also pivot the link means 18 in one rotational direction about the inner hinge axis 36, and pivot the support 11 in the opposite rotational direction about the outer vertical hinge axis 56, move the support 11 sidewardly while still maintaining the support 11 substantially parallel with the front edge 14, this latter position being indicated by dotted lines in Figure 8.

With the keyboard support 11 in its use position and at any elevation other than its lowermost position, any accidental inward movement of the keyboard support 11 toward the stationary support 13, such as due to someone inadvertently leaning against the front edge thereof, will be limited to movement into a position wherein the rear edge of the support 11 is adjacent or approximately vertically aligned with the front edge 14 inasmuch as the roller 87 will engage the perpendicular stop surface 83 and prevent any further inward movement. This hence prevents the keyboard K from striking the edge 14. The assembly can be moved into its storage position only by the operator first manually rotating the hand knob 76 so as to release the friction lock 71, following which the operator must then manually depress the support 11 into its lowermost use position as limited by the hinge pin 69 sliding along the slots 72 until the hinge pin contacts the rear ends of these slots, in which position the control roller 87 has been lowered below the stop surface 83 so as to permit the carriage 16 to then be rollingly moved rearwardly from the stop surface 83 into the rear storage position.

It is anticipated that the support 11 when in its use position will have a permissible range of both elevational and horizontal displacement in the order of six to seven inches. However, this range of movement can obviously be increased or decreased depending on desired use conditions.

The assembly of this invention can be easily manually manipulated to enable it to accommodate many different use positions and orientations, while at the same time the operator has to control only a single brake, namely by use of the readily accessible hand knob 76.

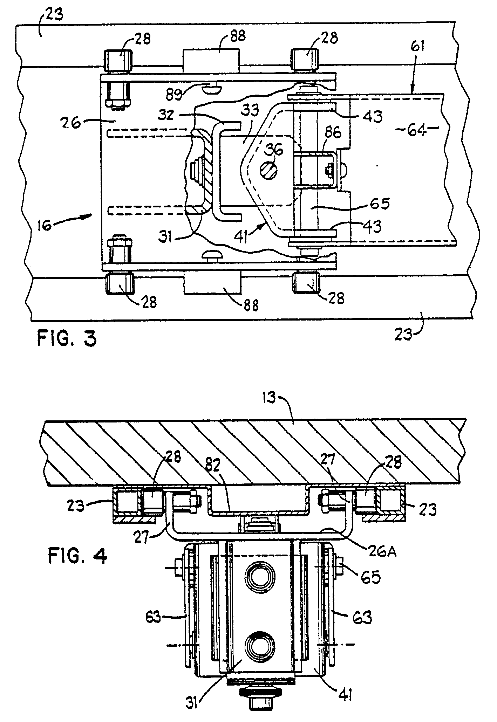

Figures 9 and 10 illustrate a variation of the hinge means used for connecting the inner end of the link means 18 to the carriage 16. In this variation, the parts are designated by the same reference numerals utilized in Figures 1—7 except for the addition of a prime (') thereto.

The modified inner hinge assembly 17' shown in Figures 9 and 10 increases the permissible angular displacement of the work surface assembly about the vertical axis 36', and in fact permits the work surface assembly to be rotated through 360° about the hinge axis 36'. The inner hinge pin 34' is again fixed to and projects vertically downwardly from the center portion of the carriage plate 26'. The intermediate member 41' is rotatably supported on the hinge pin 34' and includes a top swivel plate 91 which is positioned directly below the underside of the carriage plate 26', with a suitable friction pad 92 being provided on the plate 91 for frictional engagement with the carriage plate 26'. Intermediate member 41' also includes a downwardly opening, U-shaped part 93 which has the upper wall 94 thereof abutted against the swivel plate 91 and rotatably surrounding the hinge pin 34'. The swivel plate 91 has appropriate reinforcing brackets 96 which are fixedly engaged to the opposite legs or sidewalls 97 of the part 93. These latter sidewalls 97 function the same as the side legs 43 of the intermediate member 41 described above, and hence hingedly connect to the inner ends of the links 61 and 62 by means of the hinge pins 65 and 68.

With the arrangement of Figures 9 and 10, the work surface assembly hence can be rotatably swivelled about the inner vertical hinge axis 36' through 360° if necessary. Thus, if the assembly is mounted on a narrow table, the assembly can be swung about the axis 36' so as to position the support 11 adjacent either side of the table at intervals spaced 180° apart, or adjacent an end edge of the table. The support 11 is preferably provided with a stop fixed to and projecting upwardly therefrom adjacent the rearward edge thereof, which stop contacts the edge 14 and prevents the support 11 from being moved into a position below the stationary support 13. This stop has a height which permits it to pass under the support 13 only when the support 11 is in its lowermost elevational position so as to ensure proper clearance for the keyboard.

As a further modification, the guide rail means 21 can be mounted on the underside of the stationary support 11 so as to extend parallel with the free edge 14 (rather than perpendicular thereto as illustrated by Figures 1 and 2). With the guide rail means 21 extending parallel to the support edge 14, and with the link means 18 extending perpendicular to the direction of movement along the rail means, then the assembly can be moved laterally along the edge of the work surface so that the keyboard can be moved from one work station to another.

**Claims**

1. In combination, a primary support (13) defining thereon an enlarged upwardly facing primary work surface (47), the primary support (13) having a front edge (14) adjacent the primary work surface (47), an auxiliary shelflike support (11) defining thereon an enlarged upwardly facing auxiliary work surface (46) adapted for supporting a keyboard unit (k) thereon, the auxiliary shelflike support (11) having front and rear edges and spaced side edges so that the auxiliary support (11) is of substantial sideward extent, and a mounting mechanism (12) connecting said primary and auxiliary work supports (13, 11) together for movably supporting the auxiliary support (11) relative to the primary support (13) in the vicinity of the front edge (14) of said primary support (13), characterized by said mounting mechanism (12) comprising:

carriage means (16) positioned under and movably mounted on the underside of said primary support (13) for linear horizontal translation of said carriage means (16) relative to said primary support (13) along a direction which extends substantially perpendicularly with respect to the front edge (14) of said primary support (13);

first stop means (29) for limiting the horizontal translation of said carriage means (16) as it moves from an inner storage position wherein the auxiliary support (11) and a keyboard (k) thereon are disposed substantially directly below said primary support (13) to an outer use position wherein the auxiliary support (11) is disposed so that its rear edge is adjacent or spaced horizontally outwardly from the front edge (14) of said primary support (13);

a first hinge assembly (17) positioned under said primary support (13) and mounted on said carriage means (16) for pivotal movement relative to said carriage means (16) about a first substantially vertical hinge axis (36);

a second hinge assembly (19) mounted on the underside of said auxiliary support (11) for pivotal movement relative thereto about a second substantially vertical hinge axis (56) which is spaced a substantial distance from said first vertical hinge axis (36);

vertically swingable, elongated link means (18) connected to said first and second hinge assemblies (17, 19) for permitting vertical displacement of the auxiliary support (11) relative to the primary support (13) while maintaining said auxiliary support (11) oriented so that the upper surface (46) thereof maintains its predetermined upwardly-facing orientation relative to the primary support (13) and is not changed due to the vertical swinging of the link means (18);

said link means (18) permitting said auxiliary support (11) to be swingably vertically displaced between a raised use position wherein the auxiliary support (11) is disposed adjacent but outwardly form the front edge of said primary support (13) and a lowered storage position wherein the auxiliary support (11) is spaced downwardly a substantial distance below the underside of said primary support (13), the spacing between said raised use position and said lowered storage position being substantially greater than the thickness of said auxiliary support (11) to permit said auxiliary support (11) and a keyboard (k) thereon to be stored beneath said primary support (13);

said link means (18) comprising a pair of elongated and substantially parallel upper links (63) disposed in adjacent but sidewardly spaced relationship, said pair of upper links (63) having their rearward ends pivotally joined to said first hinge assembly (17) about a first substantially horizontal pivot axis (65), and having their outer ends pivotally joined to said second hinge assembly about a second substantially horizontal pivot axis (66);

said link means (18) including at least one elongated lower link (62) disposed sidewardly between the upper links (63) and having its rearward end pivotally joined to said first hinge assembly (17) about a third substantially horizontal pivot axis (68) and having its outer end pivotally joined to said second hinge assembly (19) about a fourth substantially horizontal pivot axis (69);

the sideward spacing between said pair of upper links (63) being a small fraction of the overall sideward extent of said auxiliary support (11);

second stop means (81) for preventing horizontal rearward movement of said auxiliary support (11) from the outer use position toward the inner storage position except when the auxiliary support is in said lowered storage position or in close proximity thereto so as to prevent the keyboard (k) from striking the front edge (14) of the primary support (13) and being knocked off of the auxiliary support (11);

lock means (71) for locking said link means (18) to prevent vertical swinging thereof, said lock means (71) including a manually accessible locking member (76) for permitting the link means (18) to be locked at any selected vertical elevation at or between said raised and lowered positions.

2. A combination according to Claim 1, wherein said link means (18) includes an elongated top wall (64) which extends sidewardly between and is fixedly joined to the upper edges of said upper links (63) for defining a channel-shaped member (61) which opens downwardly and has said lower link (62) positioned substantially therein.

3. A combination according to claim 1 or 2, including spring means (79) associated with said link means (18) for exerting a biasing force tending to swing said link means (18) upwardly to effect raising of said auxiliary support (11), said spring means (79) being positioned between said pair of upper links (63) and below the upper edges thereof.

4. A combination according to any one of the preceeding claims wherein the lower link (62) is of an upwardly opening channel-shaped cross section which telescopes upwardly between the pair of upper links (63) so as to define a substantially closed channel.

5. A combination according to any one of claims 1—4, including friction brake means associated with each of said first and second vertical axes (36, 56) for hindering relative rotation thereabout.

**Patentansprüche**

1. In Kombination: ein Hauptträger (13), der eine ausgedehnte, nach oben weisende Hauptarbeitsfläche (47) definiert und einen vorderen Rand (14) benachbart der Hauptarbeitsfläche (47) aufweist, ein tablettartiger Hilfsträger (11), der eine ausgedehnte, nach oben weisende Hilfsarbeitsfläche (46) definiert, die zur Aufnahme einer Tastatureinheit (k) bestimmt ist, und der vordere und hintere Ränder und im Abstand angeordnete Seitenränder aufweist, so daß der Hilfsträger (11) von im wesentlichen seitlicher Ausdehnung ist, und ein Montagemechanismus (12), der die Haupt- und Hilfsarbeitsträger (13, 11) miteinander verbindet, um den Hilfsträger (11) relativ zum Hauptträger (13) in Nachbarschaft zum vorderen Rand des Hauptträgers (13) beweglich abzustützen, dadurch gekennzeichnet, daß der Montagemechanismus (12) enthält:

einen Schlitten (16), der unter der Unterseite des Hauptträgers (13) angeordnet und beweglich daran für eine lineare Horizontalbewegung relativ zu dem Hauptträger (13) in einer Richtung, die sich im wesentlichen senkrecht zum vorderen Rand (14) des Hauptträgers (13) erstreckt, montiert ist;

eine erste Anschlageinrichtung (29) zum Begrenzen der horizontalen Verschiebung des Schlittens (16), wenn er sich von einer inneren Verstauposition, in der der Hilfsträger (11) und eine Tastatur (k) darauf im wesentlichen direkt unter dem Hauptträger (13) angeordnet sind, in eine äußere Gebrauchsposition bewegt, in der der Hilfsträger (11) so angeordnet ist, daß sein hinterer Rand benachbart oder horizontal beabstandet außerhalb des vorderen Randes (14) des Hauptträgers (13) angeordnet ist;

eine erste Scharnieranordnung (17), die unter dem Hauptträger (13) angeordnet und an dem Schlitten (16) zur Schwenkbewegung relativ zu dem Schlitten (16) um eine erste, im wesentlichen vertikale Scharnierachse (36) montiert ist;

eine zweite Scharnieranordnung (19), die an der Unterseite des Hilfsträgers (11) zur Schwenkbewegung relativ dazu um eine zweite im wesentlichen vertikale Scharnierachse (56) montiert ist, die einen wesentlichen Abstand von der ersten vertikalen Scharnierachse (36) hat;

vertikal verschwenkbare, langgestreckte Verbindungseinrichtungen (18), die mit den ersten und zweiten Scharnieranordnungen (17, 19) verbunden sind, um eine vertikale Verstellung des Hilfsträgers (11) relativ zum Hauptträger (13) zu ermöglichen, während die Ausrichtung des Hilfsträgers (11) so aufrechterhalten wird, daß die Oberseite (46) desselben in ihrer vorbestimmten, nach oben weisenden Ausrichtung relativ zum Hauptträger (13) verbleibt und durch die Vertikalverschwenkung der Verbindungseinrichtungen (18) nicht geändert wird;

welche Verbindungseinrichtungen (18) es ermöglichen, den Hilfsträger (11) durch vertikales Verschwenken zwischen einer angehobenen Gebrauchsstellung, in der der Hilfsträger (11) benachbart jedoch außerhalb des vorderen Randes des Hauptträgers (13) angeordnet ist, und einer abgesenkten Verstauposition, in der der Hilfsträger (11) in einem wesentlichen Abstand unter der Unterseite des Hauptträgers (13) angeordnet ist, zu verstellen, wobei der Abstand zwischen der angehobenen Gebrauchsposition und der abgesenkten Verstauposition wesentlich größer als die Dicke des Hilfsträgers (11) ist, damit der Hilfsträger (11) und eine Tastatur (k) darauf unter dem Hauptträger (13) verstaut werden können;

welche Verbindungseinrichtungen (18) ein Paar langgestreckter und im wesentlichen paralleler oberer Lenker (63) aufweisen, die benachbart jedoch in seitlich beabstandetem Verhältnis angeordnet sind, wobei das Paar oberer Lenker (63) mit ihren hinteren Enden schwenkbar mit der ersten Scharnieranordnung (17) um eine erste, im wesentlichen horizontale Schwenkachse (65) verbunden sind und mit ihren äußeren Enden schwenkbar mit der zweiten Scharnieranordnung um eine zweite, im wesentlichen horizontale Schwenkachse (66) verbunden sind;

welche Verbindungseinrichtungen (18) wenigstens einen langgestreckten unteren Lenker (62) aufweisen, der seitwärts zwischen den oberen Lenkern (63) angeordnet ist und mit seinem hinteren Ende schwenkbar mit der ersten Scharnieranordnung (17) um eine dritte, im wesentlichen horizontale Schwenkachse (68) verbunden ist, und mit seinem äußeren Ende schwenkbar mit der zweiten Scharnieranordnung (19) um eine vierte, im wesentlichen horizontale Schwenkachse (69) verbunden ist;

wobei der seitliche Abstand zwischen dem Paar oberer Lenker (63) ein kleiner Bruchteil der gesamten seitlichen Ausdehnung des Hilfsträgers (11) ist;

eine zweite Anschlageinrichtung (81) zum Verhindern einer horizontalen Zurückbewegung des Hilfsträgers (11) aus der äußeren Gebrauchsstellung gegen die innere Verstaustellung, ausgenommen, wenn der Hilfsträger sich in der abgesenkten Verstauposition oder in dichter Annäherung dazu befindet, um zu verhindern, daß die Tastatur (k) gegen den vorderen Rand (14) des Hauptträgers (13) anschlägt und von dem Hilfsträger (11) herabgestoßen wird;

eine Verriegelungseinrichtung (71) zum Verriegeln der Verbindungseinrichtungen (18), um ein vertikales Verschwenken derselben zu verhindern, enthaltend ein manuell zugängliches Verriegelungselement (76), das es erlaubt, die Verbindungseinrichtungen (18) in jeder ausgewählten vertikalen Hubstellung an oder zwischen den angehobenen und abgesenkten Stellungen zu verriegeln.

2. Kombination nach Anspruch 1, bei der die Verbindungseinrichtungen (18) eine langgestreckte obere Wand (64) aufweisen, die sich seitwärts dazwischen erstreckt und die fest mit den oberen Rändern der oberen Lenker (63) verbunden ist, um ein kanalartiges Element (61) zu bilden, das sich nach unten öffnet und in dem der untere Lenker (62) im wesentlichen angeordnet ist.

3. Kombination nach Anspruch 1 oder 2, enthaltend Federeinrichtungen (79), die den Verbindungseinrichtungen (18) zugeordnet sind, um eine Vorspannkraft auszuüben, die dazu tendiert, die Verbindungseinrichtungen (18) nach oben zu schwenken, um ein Anheben des Hilfsträgers (11) zu bewirken, welche Federeinrichtungen (79) zwischen dem Paar oberer Lenker (63) und unter den oberen Rändern derselben angeordnet sind.

4. Kombination nach einem der vorhergehenden Ansprüche, bei der der untere Lenker (62) von einem sich nach oben öffnenden kanalartigen Querschnitt ist, der nach oben teleskopisch zwischen das Paar oberer Lenker (63) eingreift, um einen im wesentlichen geschlossenen Kanal zu bilden.

5. Kombination nach einem der Ansprüche 1 bis 4, enthaltend Reibungsbremseinrichtungen, die jeder der genannten ersten und zweiten vertikalen Achsen (36, 56) zugeordnet sind, um eine Relativdrehung um sie zu behindern.

**Revendications**

1. En combinaison, un support primaire (13) sur lequel est définie une surface de travail primaire agrandie (47) faisant face vers le haut, le support primaire (13) présentant un bord avant (14) près de la surface de travail primaire (47), un support auxiliaire en forme de tablette (11) sur lequel est définie une surface de travail auxiliaire agrandie (46) faisant face vers le haut et conçue pour supporter sur elle un clavier (k), le support auxiliaire en forme de tablette (11) présentant des bords avant et arrière et des bords latéraux espacés l'un de l'autre de sorte que le support auxiliaire (11) présente une étendue latérale substantielle, et un mécanisme de montage (12) reliant ensemble lesdits supports de travail primaire et auxiliaire (13, 11) pour supporter le support auxiliaire (11) de façon mobile par rapport au support primaire (13), au voisinage du bord avant (14) dudit support primaire (13), caractérisé en ce que ledit mécanisme de montage (12) comporte:

un moyen formant chariot (16) positionné sous la face inférieure dudit support primaire (13) et monté de façon mobile sur cette face inférieure dudit support primaire (13), en vue d'une translation horizontale linéaire dudit moyen formant chariot (16) par rapport audit support primaire (13) selon une direction qui s'étend substantiellement perpendiculairement par rapport au bord avant (14) dudit support primaire (13);

un premier moyen formant butée (29) pour limiter la translation horizontale dudit moyen formant chariot (16) lorsqu'il se déplace d'une position intérieure de rangement dans laquelle le support auxiliaire (11) et un clavier (k) situé sur ce dernier sont disposés substantiellement immédiatement en dessous dudit support primaire (13), à une position extérieure d'utilisation, dans laquelle le support auxiliaire (11) est disposé de sorte que son bord arrière soit proche, ou espacé horizontalement vers l'extérieur, du bord avant (14) dudit support primaire (13);

un premier ensemble formant charnière (17) positionné sous ledit support primaire (13) et monté sur ledit moyen formant chariot (16) en vue d'un mouvement de pivotement par rapport audit moyen formant chariot (16) autour d'un premier axe de charnière (36) substantiellement vertical;

un second ensemble formant charnière (19) monté sur la face inférieure dudit support auxiliaire (11) en vue d'un mouvement de pivotement par rapport à elle autour d'un second axe de charnière (56) substantiellement vertical, qui est espacé d'une distance substantielle dudit premier axe de charnière vertical (36);

un moyen formant tringlerie (18) de forme allongée, pouvant pivoter verticalement et relié auxdits premier et second ensembles formant charnières (17, 19) pour permettre un déplacement vertical du support auxiliaire (11) par rapport au support primaire (13) tout en maintenant ledit support auxiliaire (11) orienté de façon que sa surface supérieure (46) conserve son orientation prédéterminée tournée vers le haut par rapport au support primaire (13) et ne soit pas modifiée par suite du pivotement vertical du moyen formant tringlerie (18);

ledit moyen formant tringlerie (18) permettant audit support auxiliaire (11) d'être déplacé verticalement par pivotement entre une position haute d'utilisation dans laquelle le support auxiliaire (11) est disposé près du bord avant dudit support primaire (13) mais à l'extérieur de ce bord, et une position basse de rangement dans laquelle le support auxiliaire (11) est espacé vers le bas d'une distance substantielle au-dessous de la face inférieure dudit support primaire (13), l'espacement entre ladite position haute d'utilisation et ladite position basse de rangement étant substantiellement supérieure à l'épaisseur dudit support auxiliaire (11) pour permettre audit support auxiliaire (11) et à un clavier (k) situé sur ce dernier d'être rangés sous ledit support primaire (13);

ledit moyen formant tringlerie (18) comportant deux tringles supérieures (63) de forme allongée et substantiellement parallèles, disposées près l'une de l'autre mais à une certaine distance latérale l'une de l'autre, les deux tringles supérieures (63) ayant leurs extrémités arrière reliées audit premier ensemble formant charnière (17) de façon à pouvoir pivoter autour d'un premier axe de pivotement (65) substantiellement horizontal et ayant leurs extrémités extérieures reliées audit second ensemble formant charnière de façon à pouvoir pivoter autour d'un second axe de pivotement (66) substantiellement horizontal;

ledit moyen formant tringlerie (18) comportant au moins une tringlerie inférieure (62) de forme allongée, disposée latéralement entre les tringles supérieures (63) et ayant son extrémité arrière reliée audit premier ensemble formant charnière (17) de façon à pouvoir pivoter autour d'un troisième axe de pivotement (68) substantiellement horizontal et ayant son extrémité extérieure reliée audit second ensemble formant charnière (19) de manière à pouvoir pivoter autour d'un quatrième axe de pivotement (69) substantiellement horizontal;

l'espacement latéral entre les deux tringles supérieures (63) étant une petite fraction de l'étendue latérale globale dudit support auxiliaire (11);

un second moyen formant butée (81) pour empêcher un déplacement horizontal vers l'arrière dudit support auxiliaire (11), de la position extérieure d'utilisation à la position intérieure de rangement, excepté lorsque le support auxiliaire est dans ladite position basse de rangement ou très près de cette position, de façon à empêcher le clavier (k) de heurter le bord avant (14) du support primaire (13) et de tomber du support auxiliaire (11);

un moyen formant verrou (71) pour verrouiller ledit moyen formant tringlerie (18) pour empêcher son pivotement vertical, ledit moyen formant verrou (71) comprenant un élément de verrouillage (76) accessible manuellement pour permettre le verrouillage du moyen formant tringlerie (18) dans n'importe quelle position en hauteur choisie au niveau desdites positions haute ou basse entre lesdites positions haute et basse.

2. Combinaison selon la revendication 1, dans laquelle ledit moyen formant tringlerie (18) comprend une paroi supérieure de forme allongée (64) qui s'étend latéralement entre les bords supérieurs desdites tringles supérieures (63) et est reliée de façon fixe à ces bords supérieurs pour définir un élément en forme de canal (61) qui s'ouvre vers le bas et dans lequel ladite tringle inférieure (62) est positionnée de façon substantielle.

3. Combinaison selon la revendication 1 ou 2, comprenant des moyens formant ressorts (79) associés audit moyen formant tringlerie (18) pour exercer une force de sollicitation tendant à faire pivoter ledit moyen formant tringlerie (18) vers le haut pour réaliser la levée dudit support auxiliaire (11), lesdits moyens formant ressorts (79) étant positionnés entre les deux tringles supérieures (63) et au-dessous des bords supérieurs de celles-ci.

4. Combinaison selon l'une quelconque des revendications précédentes, dans laquelle la tringle inférieure (62) a une section droite en forme de canal s'ouvrant vers le haut et s'étend de façon télescopique vers le haut entre les deux tringles supérieures (63) de façon à définir un canal substantiellement fermé.

5. Combinaison selon l'une quelconque des revendications 1—4, comportant un moyen formant frein à friction associé à chacun desdits premier et second axes verticaux (36, 56) pour empêcher une rotation autour de ces axes.

FIG. 1

FIG. 2

EP 0 096 373 B1

FIG. 3

FIG. 4

2

FIG. 5

88    82  84  89  90  88

23                    23

35

27                    27
27  44        26

41

43

34

39                    33
38

36

FIG. 8

36    13

18        18

76    11

11

56

48

11

FIG. 6

FIG. 7

FIG. 9

FIG. 10